Europäisches Patentamt

European Patent Office

Office européen des brevets

(11) Publication number: **0 422 244 A1**

# EUROPEAN PATENT APPLICATION
## published in accordance with Art. 158(3) EPC

(21) Application number: 90905663.2

(22) Date of filing: 07.04.90

(86) International application number:
PCT/JP90/00476

(87) International publication number:
WO 90/13074 (01.11.90 90/25)

(51) Int. Cl.⁵: G05B 19/18, G05B 19/19

(30) Priority: 19.04.89 JP 99138/89

(43) Date of publication of application:
17.04.91 Bulletin 91/16

(84) Designated Contracting States:
DE FR GB

(71) Applicant: FANUC LTD.
3580, Shibokusa Aza-Komanba, Oshino-mura
Minamitsuru-gun, Yamanashi 401-05(JP)

(72) Inventor: YONEKURA, Mikio Keio Takao
Mansion 1103
1231-36, Hatsuzawamachi
Hachioji-shi Tokyo 193(JP)

(74) Representative: Brunner, Michael John et al
GILL JENNINGS & EVERY 53-64 Chancery
Lane
London WC2A 1HN(GB)

(54) NUMERICAL CONTROLLER.

(57) A numerical controller having a main processor (1) for NC control and a plurality of subprocessors (61a, 61b) for servo control provided to meet the number of the controlled shafts. Between the main processor (1) and the subprocessors (61a, 61b), there are provided LSIs which contain shared RAMs (91a, 91b) for data exchange and arbitration circuits (94a, 94b), respectively. These LSIs (9a, 9b) are provided for their respective subprocessors (61a, 61b), and they act between the main processor (1) and the corresponding subprocessor (61a) only. Further, since the circuit that includes the LSI (9a, 9b) and the corresponding subprocessor (61a, 61b) for servo control is constituted as an independent module, the numerical controller can be easily realized to control an increased number of shafts by simply increasing the modules depending upon the number of shafts to be controlled.

Fig. 1

## NUMERICAL CONTROL APPARATUS

TECHNICAL FIELD

The present invention relates to a numerical control apparatus controlled by a multi-processor circuit, and more specifically, to a numerical control apparatus having an improved data communication between respective processors.

BACKGROUND ART

Control apparatuses such as numerical control apparatuses employ a multi-processor circuit composed of a main processor for performing a CNC function (decoding a machining program and outputting a servo command), and sub-processors for receiving a command from the main processor and controlling servo motors. Usually, one sub-processor is used for each one axis or each two axes to be controlled.

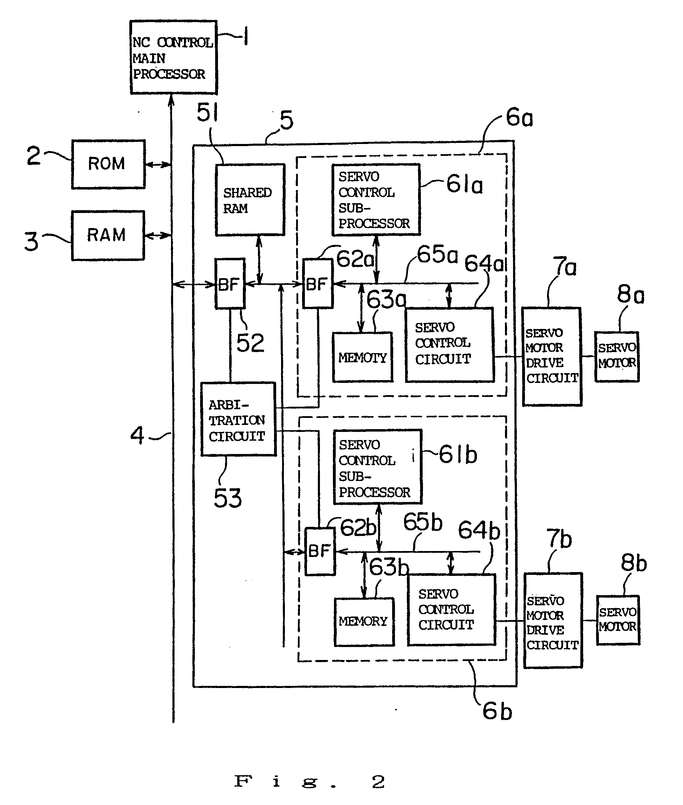

Figure 2 shows a prior art connecting relationship of an NC control main processor and servo control sub-processors.

The NC control main processor 1 controls the numerical control apparatus as a whole, the ROM 2 is composed of an EPROM or an EEPROM in which a control program is stored, and the RAM 3 is composed of a DRAM or the like in which various data or I/O signals are stored. The NC control main processor 1, the ROM 2, and the RAM 3 are interconnected through a bus 4.

A printed circuit board 5, on which servo control modules 6a and 6b, and the like are mounted, is connected to the bus 4 through a bus buffer 52. Note, the servo control module 6b has the same arrangement as that of the servo module 6a, and thus a description thereof is omitted. A servo control sub-processor 61a controls the servo control module 6a as a whole, a memory 63a stores a control program and various data of a servo motor 8a, and a servo control circuit 64a, which controls the rotation of the servo motor 8a, receives feed back pulses and the like from a rotary encoder contained in the servo motor 8a. The servo control sub-processor 61a, the memory 63a, and the servo control circuit 64a are interconnected through a local bus 65a, respectively.

A servo motor drive circuit 7a drives the servo motor 8a in response to a control signal from the servo control circuit 64a. The servo motor 8a contains a rotary encoder for feeding back a feedback pulse of a position signal to the servo control circuit 64a.

A shared RAM 51, which is used to exchange data between the NC control main processor 1 and the servo control sub-processors 61a, 61b, is connected to the servo control modules 6a and 6b through bus buffers 62a and 62b. An arbitration circuit 53 arbitrates access and competition between the bus buffers 52, 62a, and 62b.

The NC control main processor 1 writes interpolation data and the like to the shared RAM 51 to control the servo motors. The servo control sub-processor 61a or 61b reads the interpolation data from the shared RAM 51, and further, the servo control sub-processor 61a or 61b writes position data, and the like of the servo motor 8a or 8b to the shared RAM 51, which data is read by the NC control main processor 1. Namely, the data exchange is made as described above. Although these elements are actually provided for the number of axes to be controlled, only the elements for two axes are described here.

The shared RAM 51 is composed of a general purpose SRAM, and any one processor of the NC control main processor 1 and the servo control sub-processors 61a and 61b can access the data stored in shared RAM 51. Therefore, when these units compete for access to the data, the arbitration circuit must arbitrate between these units.

In particular, since a plurality of servo control sub-processors effect similar processings in synchronism, in the case of a control apparatus such as a numerical control apparatus by which servomotors are controlled, the shared RAM 51 is often simultaneously accessed, and thus a problem arises in that these sub-processors often compete for access.

Therefore, when the number of servomotors controlled by a prior art system, i.e. the number of axes to be controlled is increased, access to the shared RAM 51 is often affected by this competition, and thus a problem arises in that an access waiting time is prolonged whereby the performance of the numerical control apparatus is lowered.

Further, when the size of a prior art multi-processor circuit is reduced and it is formed into modules, the following two problems arise.

First, so many addresses and data buffers are used that even if they are formed as LSIs to reduce the space required for mounting same, this reduction of the space is not cost-effective.

Second, when a circuit is divided into a plurality of portions each able to be formed into a module, the modules are ideally provided for the number of axes to be controlled. In the prior art system, however, the portion of the shared RAM 51 and the servo control sub-processors 61a and 61b must be formed into independent modules, which increases the number of the modules required.

Further, although the general purpose SRAM used as the shared RAM 51 in the prior art has a capacity of about 16 K bytes, this capacity is too large to process an amount of data (about 16 bits x 24 words) actually exchanged between the NC control main processor 1 and the servo control sub-processors 61a, 61b, and thus the use of the SRAM is unnecessary.

## DISCLOSURE OF THE INVENTION

Taking the above into consideration, an object of the present invention is to provide a numerical control apparatus by which the size of a servo control circuit can be reduced and it can be formed into modules, and the performance of the numerical control apparatus is not lowered even if many axes are controlled.

To solve the above problem, according to the present invention, there is provided a numerical control apparatus having an NC control main processor and a plurality of servo control sub-processors provided in accordance with the number of axes to be controlled, which comprises a dedicated LSI, in which a data exchanging RAM and an arbitration circuit for arbitrating accesses effected between the processors are integrated, disposed between the NC control main processor and each of the servo control sub-processors.

Since the dedicated LSI composed of the data exchanging RAM and the access arbitration circuit integrated therein is provided for each of the servo control sub-processors, the access arbitration circuit is able to arbitrate access competition between the corresponding sub-processor and the main processor. Further, since a circuit including the dedicated LSI and the servo control sub-processor can be arranged as a single independent module, a numerical control apparatus for controlling many axes can be easily realized by only the provision of a number of modules corresponding to the number of axes to be controlled.

## BRIEF DESCRIPTION OF THE DRAWINGS

Figure 1 is a diagram showing the connecting relationship between an NC control main processor and servo control sub-processors of a numerical control apparatus, as an embodiment according to the present invention; and

Figure 2 is a diagram showing the connecting relationship between an NC control main processor and servo control sub-processors of prior art.

## BEST MODE OF CARRYING OUT THE INVENTION

An embodiment of the present invention will be described below with reference to the drawing.

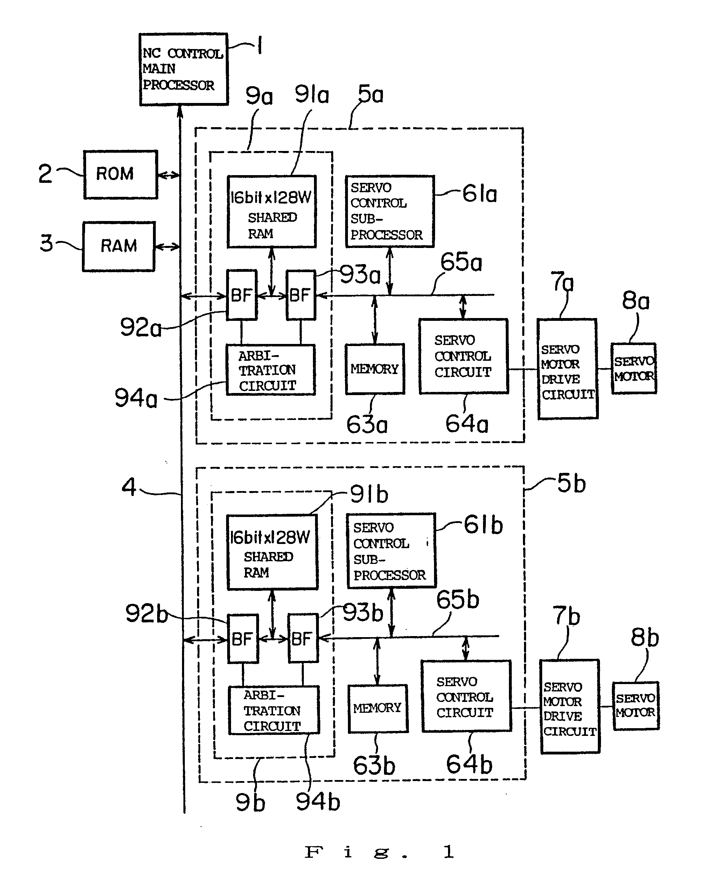

Figure 1 is a diagram showing the connecting relationship between an NC control main processor and servo control sub-processors of a numerical control apparatus, as an embodiment according to the present invention. In Figure 1, since the same numerals are used for the same components as shown in Figure 2, a description thereof is omitted.

The prior art servo control module 6a is composed of the servo control sub-processor 61a, the bus buffer 62a the memory 63a, and the servo control circuit 64a. In the present invention, however, a shared RAM 91a, bus buffers 92a and 93a, and an arbitration circuit 94a are arranged as a single dedicated LSI 9a, and the dedicated LSI 9a and other devices (a servo control sub-processor 61a, a memory 63a and a servo control circuit 64a) are formed into a module, whereby a servo control module 5a is arranged. The servo control module 5b has the same arrangement as that of the servo control module 5a, and thus a description thereof is omitted. The shared RAM 91a contained in the dedicated LSI 9a is arranged to have a capacity, e.g., about 16 bits x 128 words, needed by a numerical control apparatus. Therefore, the LSI including the other arbitration circuit 94a, and the bus buffers 92a and 93a can be easily made. Since the dedicated LSI 9a contains the memory, a prior art problem in that an LSI including these elements is not cost-effective can be avoided, and as a result, the size of a circuit can be reduced by being integrated and formed into a module.

The servo control modules 5a and 5b each arranged as the module and the NC control main processor 1 are commonly interconnected through a bus 4. More specifically, a servo control circuit formed into the module for each axis is connected to the axis. Namely, the thus formed modules are independent from each other and no other common circuit is needed in addition to thereto, and thus sufficient modules can be provided for the number of axes to be controlled.

Since the servo control modules 5a and 5b include the shared RAMs 91a and 91b each having a small capacity, and the access arbitration circuits 94a and 94b for the respective servo control sub-processors 61a and 61b, the access arbitration circuits 94a and 94b only arbitrate access competition between the servo control sub-processors 61a, 61b and the NC control main processor 1. Therefore, since only two objects are to be arbitrated by the arbitration circuit 94a and 94b, an effect can be obtained in that the arbitration can be effected more easily than in the prior art and the arbitration speed is increased, and thus the performance of the numerical control apparatus is not lowered because the occurrence of access competition is reduced, even if the number of axes is increased.

As described above, according to the present invention, the main processor is simply connected to a plurality of the sub-processors, and thus integrated circuits and modules can be easily made. Further, the occurrence of access competition is reduced when the RAMs shared by the processors are accessed, and thus the performance of the numerical control apparatus is not lowered.

## Claims

1. A numerical control apparatus having an NC control main processor and a plurality of servo control sub-processors provided in accordance with the number of axes to be controlled, comprising:
   a dedicated LSI, in which a data exchanging RAM and an arbitration circuit for arbitrating accesses effected between said processors are integrated, disposed between said NC control main processor and each of said servo control sub-processors.

2. A numerical control apparatus according to claim 1, wherein said servo control sub-processor, said dedicated LSI, a memory in which various data is stored, and a servo control circuit for controlling the rotation of a servo motor are arranged as a single module.

3. A numerical control apparatus according to claim 1, wherein said RAM has a capacity of about 16 bits x 128 words.

F i g . 1

F i g .  2

# INTERNATIONAL SEARCH REPORT

International Application No PCT/JP90/00476

## I. CLASSIFICATION OF SUBJECT MATTER (if several classification symbols apply, indicate all) 6

According to International Patent Classification (IPC) or to both National Classification and IPC

Int. Cl$^5$    G05B19/18, 19/19

## II. FIELDS SEARCHED

### Minimum Documentation Searched 7

| Classification System | Classification Symbols |
|---|---|
| IPC | G05B19/18, 19/19 |

### Documentation Searched other than Minimum Documentation to the Extent that such Documents are Included in the Fields Searched 8

| | |
|---|---|
| Jitsuyo Shinan Koho | 1971 - 1990 |
| Kokai Jitsuyo Shinan Koho | 1971 - 1990 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 63-68905 (Toshiba Machine Co., Ltd.), 28 March 1988 (28. 03. 88), Line 18, upper right column, page 2 to line 3, upper right column, page 5 (Family: none) | 1 - 3 |
| Y | JP, A, 61-296407 (Mitsubishi Electric Corp.), 27 December 1986 (27. 12. 86), (Family: none) | 1 - 3 |
| P | JP, A, 02-62604 (Fanuc Ltd.), 2 March 1990 (02. 03. 90), (Family: none) | 1 - 3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| June 22, 1990 (22. 06. 90) | July 9, 1990 (09. 07. 90) |

| International Searching Authority | Signature of Authorized Officer |
|---|---|
| Japanese Patent Office | |

Form PCT/ISA/210 (second sheet) (January 1985)